# EUROPEAN PATENT SPECIFICATION

(11) **EP 3 042 720 B1**
(45) Date of publication and mention of the grant of the patent: **03.10.2018**
(21) Application number: 14842184.5
(22) Date of filing: 22.08.2014
(51) Int. Cl.: B01J 23/34, B01J 23/889, B01J 23/00, B01J 23/02, B01J 37/03, B01J 37/12, B01J 37/06

(54) **OXIDATION CATALYST FOR PURIFYING EXHAUST GAS, CATALYST STRUCTURE FOR PURIFYING EXHAUST GAS, AND EXHAUST GAS PURIFYING METHOD USING SAME**
OXIDATIONSKATALYSATOR ZUR ABGASREINIGUNG, KATALYSATORSTRUKTUR ZUR ABGASREINIGUNG UND ABGASREINIGUNGSVERFAHREN DAMIT
CATALYSEUR D'OXYDATION POUR ÉPURATION DES GAZ D'ÉCHAPPEMENT, STRUCTURE DE CATALYSEUR POUR ÉPURATION DES GAZ D'ÉCHAPPEMENT ET PROCÉDÉ D'ÉPURATION DES GAZ D'ÉCHAPPEMENT UTILISANT LEDIT CATALYSEUR ET LADITE STRUCTURE

(30) Priority: 05.09.2013 JP 2013183587
(43) Date of publication of application: 13.07.2016
(73) Proprietor: N.E. Chemcat Corporation, Tokyo 105-6124 (JP)
(72) Inventor: HIRASAWA Yoshiro, Numazu-shi Shizuoka 410-0314 (JP); KAYADA Yuto, Numazu-shi Shizuoka 410-0314 (JP)
(74) Representative: Müller-Boré & Partner Patentanwälte PartG mbB
(86) International application number: PCT/JP2014/071949
(87) International publication number: WO 2015/033798

(56) References cited:
- EP-A1- 1 810 750
- WO-A1-97/00119
- JP-A- 2002 177 787
- JP-A- 2006 081 988
- JP-A- 2007 229 679
- US-A1- 2013 084 222

## Description

### TECHNICAL FIELD

The present invention relates to an oxidation catalyst for exhaust gas purification, a catalyst structure for exhaust gas purification, and a method for purifying exhaust gas using the catalyst structure. More specifically, the present invention relates to an oxidation catalyst for exhaust gas purification that removes toxic materials from exhaust gas emitted from a diesel engine, a catalyst structure for exhaust gas purification that contains the catalyst, and a method for purifying exhaust gas that uses the catalyst structure and can efficiently remove toxic materials from exhaust gas at low temperatures.

### BACKGROUND ART

Various internal combustion engines are in practical use, and they are broadly classified in terms of their fuel and combustion system into gasoline engines and diesel engines. These internal combustion engines emit exhaust gas containing various toxic components, and the emission quantities of the toxic components are regulated. Major toxic components are hydrocarbons (HC), carbon monoxide (CO), and nitrogen oxides (NOx). As for diesel engines, the emission quantity of particulate matter (PM) is also regulated. The HC component and the PM component include soot and soluble organic fraction (SOF). SOF contains organic compounds having relatively high molecular weights produced during incomplete combustion of fuel and lubricant oil. Recent advancements in technology applicable to processing of such toxic components in exhaust gas emitted from both gasoline engines and diesel engines have been successfully achieving reduction in the emission quantities of the toxic materials.

In addition to the regulation on these toxic components, improvement in fuel economy of gasoline engines and diesel engines has been increasingly sought after in recent years. As for such improvement in fuel economy, Japan and many other countries around the world have target standards for fuel economy, which have been raised year after year.

Examples of an approach to meet such a standard for fuel economy include lean combustion with a high air-fuel ratio, fuel cut-off, which refers to a temporary stop of fuel supply during engine operation, and control to reduce engine speed. Among these, the control to reduce engine speed is regarded as one of the most effective means and is adopted by automakers. All of these means for improving fuel economy reduce fuel consumption, which drives the trend toward a lower temperature of the exhaust gas.

A diesel engine inherently operates on lean combustion of fuel. It is therefore difficult to improve the fuel economy by further performing lean-combustion control. Instead, improvement in the fuel economy is generally achieved by decreasing the engine speed. The decreased engine speed means less frequent combustion, which is regarded as one of the major reasons for exhaust gas to have a low temperature.

Toxic components in exhaust gas are removed for purification generally with a catalyst. Examples of known purification catalysts include an oxidation catalyst used for oxidizing mainly HC or CO, a catalyst used for trapping, burning, and removing PM, and a reducing catalyst used for removing NOx for purification with a reducing component such as ammonia. These catalysts are usually highly active at high temperatures. The decreased engine speed as described above and the resulting decreased temperature of exhaust gas are therefore disadvantageous for removal of toxic components for purification.

To an oxidation catalyst, a component for oxidizing carbon monoxide (NO) in NOx into nitrogen dioxide (NO₂) is sometimes added. The resulting oxidation catalyst increases the NO₂ ratio in NOx contained in exhaust gas, and then the resulting exhaust gas can be easily purified with a NOx-removing purification catalyst (catalyst used in reduction with ammonia) to be described below.

An oxidation catalyst oxidizes HC, among toxic components, to water and carbon dioxide as well as CO to carbon dioxide, thereby achieving purification. As major active species in the oxidation catalyst, platinum (Pt) and palladium (Pd) are known. It is also known that zeolites and titania are added to the oxidation catalyst for further enhancement of the ability of exhaust gas purification. Zeolites are added for the purpose of provision of an ability to adsorb HC and SOF, and titania is added for the purpose of provision of a function to prevent catalyst poisoning of a noble metal from being caused by sulfur oxides that are present in exhaust gas and are derived from sulfur in fuel (resistance to sulfur poisoning).

Pt and Pd, when used, are dispersed and supported on an inorganic oxide carrier such as zeolites and titania. As described above, it is generally advantageous for exhaust gas to have a high temperature in terms of removal of toxic components for purification.

As diesel engine fuel, ultra-low-sulfur diesel having a sulfur (S) concentration of not higher than 10 ppm by weight is achieving widespread use in Japan. However, gas oils having high S concentrations are still found in the fuel market, and even ones having S concentrations of about several hundred to several thousand parts per million are still used in some countries.

A sulfur component in fuel can cause the problem that sulfur dioxide (SO₂) in exhaust gas is oxidized at high temperatures to produce sulfuric acid salts such as salts of sulfur trioxide (SO₃) and sulfur tetroxide (SO₄), resulting in increased quantities of sulfates and particulate matter. The exhaust gas from a diesel engine contains a particularly large quantity of oxygen gas, facilitating SO₂ oxidation reaction. For this reason, sulfur components accumulated on a diesel exhaust gas oxidation catalyst (DOC) are readily oxidized by the DOC to SO₃ and SO₄, and the resulting SO₃ and SO₄ can form sulfuric acid salts and increase the PM quantity. Consequently, high resistance to sulfur poisoning has been demanded of a catalyst for exhaust gas purification.

As catalysts having enhanced resistance to sulfur poisoning as described above, the applicant discloses Patent Reference 1 and Patent Reference 2.

Patent Reference 1 discloses an oxidation catalyst for exhaust gas purification that contains a carrier containing titania and a zeolite component and contains a noble metal supported on the carrier, in which the content of the zeolite component in the catalyst is 35 to 50% by weight, and the oxidation catalyst exhibits soluble organic fraction (SOF) removal performance, particularly good carbon monoxide and hydrocarbon removal performance, and high resistance to sulfur poisoning. Patent Reference 2 discloses an oxidation catalyst for exhaust gas purification that contains a carrier containing titania and a zeolite component and contains a noble metal supported on the carrier, in which the zeolite component contains at least a ZSM-5 type zeolite and a Beta type zeolite, and the content of the zeolite component in the whole catalyst is 35 to 50% by weight.

These oxidation catalysts use their catalyst component, titania, to reduce particulate matter emitted in a form of sulfuric acid salts. Such good conventional catalyst technology, however, is becoming less capable of giving adequate purification activity of removing HC and an adequate effect to resist sulfur poisoning due to the recent trend toward a lower temperature of exhaust gas. For this reason, catalyst technology that displays good activity on exhaust gas at low temperatures has been demanded.

### Patent References

Patent Reference 1: Japanese Patent Laid-open Publication (kokai) No. 2006-81988
Patent References 2: Japanese Patent Laid-open Publication (kokai) No. 2007-229679

### DISCLOSURE OF INVENTION

### Problems Invention Aims to Solve

An object of the present invention is to provide an oxidation catalyst for exhaust gas purification that exhibits good purification performance to remove CO and HC from exhaust gas at low temperatures, a catalyst structure for exhaust gas purification that contains the catalyst, and a method for purifying exhaust gas using the catalyst structure.

### Means for Solution of the Problems

To achieve the object described above, the inventors of the present invention have conducted intensive research on oxidation catalysts for exhaust gas purification that contain titania, zeolites, and platinum. As a result, the inventors have found that by using a H-Beta type zeolite as a primary zeolite component in combination with titania and formulating Pt as an active species at a particular weight ratio, excellent purification performance to remove CO and HC from exhaust gas at low temperatures is obtained even with a small zeolite content. Thus, the catalyst technology of the present invention has been completed.

A first aspect of the present invention provides an oxidation catalyst for exhaust gas purification that contains titania (A) and a zeolite component (B), either or both of titania (A) and a zeolite component (B) as a carrier, and a noble metal component (C) supported on the carrier. The zeolite component (B) contains a H-Beta type zeolite in a quantity of not less than 90% by weight relative to the total quantity of the zeolite component (B). The content of each component in the whole catalyst is 55 to 75% by weight for the titania (A), 15 to 25% by weight for the zeolite component (B), and 0.05 to 4% by weight for the noble metal component (C).

A second aspect of the present invention provides the oxidation catalyst for exhaust gas purification as described in the first aspect in which the noble metal component (C) contains platinum or palladium and the quantity of platinum in the total quantity of the noble metal component is not lower than 90% by weight.

A third aspect of the present invention provides the oxidation catalyst for exhaust gas purification as described in the first aspect in which a SiO₂/Al₂O₃ molar ratio (SAR) in the H-Beta type zeolite is not lower than 10.

A fourth aspect of the present invention provides the oxidation catalyst for exhaust gas purification as described in the first aspect in which the titania (A) is heat resistant titania and has a BET specific surface area of 30 to 130 m²/g.

A fifth aspect of the present invention provides the oxidation catalyst for exhaust gas purification as described in the first aspect further containing alumina in a quantity of not higher than 20% by weight.

A sixth aspect of the present invention provides a catalyst structure for exhaust gas purification that contains the oxidation catalyst for exhaust gas purification as described in the first aspect as a coating on a honeycomb-shaped support and in a quantity of 55 to 120 g/L per unit volume of the support.

A seventh aspect of the present invention provides a method for purifying exhaust gas including bringing exhaust gas emitted from a diesel engine into contact with the catalyst structure for exhaust gas purification as described in the sixth aspect.

An eighth aspect of the present invention provides the method for purifying exhaust gas as described in the seventh aspect in which the exhaust gas has a temperature of not higher than 300°C.

### EFFECTS OF INVENTION

An oxidation catalyst for exhaust gas purification in the present invention contains mere 15 to 25% by weight of a H-Beta type zeolite as a primary zeolite component but exhibits excellent purification performance to remove CO and HC from exhaust gas at low temperatures. Furthermore, a catalyst structure for exhaust gas purification that is produced by using the catalyst is particularly useful for purifying exhaust gas emitted from a diesel engine that is operated at a low speed with the intention of improving fuel economy. In addition, the catalyst in the present invention has an excellent purification ability but does not contain a great quantity of a zeolite component, which is excellent from the economic standpoint.

### BRIEF DESCRIPTION OF DRAWINGS

FIG. 1 is a graph related to catalyst structures produced in Examples 1 to 4 and Comparative Examples 1 to 3 and illustrating their purification performance to remove CO and HC components (within a low-temperature range).
FIG. 2 is a graph related to catalyst structures produced in Example 1 and Comparative Example 1 and illustrating their purification performance to remove a CO component (in all the modes defined by the NEDC).
FIG. 3 is a graph related to catalyst structures produced in Example 1 and Comparative Example 1 and illustrating their purification performance to remove a HC component (in all the modes defined by the NEDC).
FIG. 4 is a graph illustrating quantities of a sulfur component accumulated on catalyst structures produced in Example 1 and Comparative Example 1.

### BEST MODE OF CARRYING OUT INVENTION

In the following, an oxidation catalyst for exhaust gas purification and a catalyst structure for exhaust gas purification in the present invention and a method for purifying exhaust gas using these are described in detail.

### Oxidation Catalyst for Exhaust Gas Purification

The oxidation catalyst for exhaust gas purification in the present invention contains titania (A) and a zeolite component (B) either or both of titania (A) and a zeolite component (B) as a carrier, and a noble metal component (C) supported on the carrier, in which the zeolite component (B) contains a H-Beta type zeolite in a quantity of not less than 90% by weight relative to the total quantity of the zeolite component (B), and the content of each component in the whole catalyst is 55 to 75% by weight for the titania (A), 15 to 25% by weight for the zeolite component (B), and 0.05 to 4% by weight for the noble metal component (C).

In the following, each component of the oxidation catalyst for exhaust gas purification in the present invention (hereinafter, sometimes simply called an oxidation catalyst) is described in detail.

### [Zeolites]

The zeolite component in the oxidation catalyst in the present invention contains a H-Beta type zeolite as a primary zeolite component. A H-Beta type zeolite has a stable structure constituted of a Beta type zeolite that has a three-dimensional framework structure with large-size pores and hydrogen (as protons) bonded within the pores. Containing such a zeolite component, the oxidation catalyst in the present invention can have improved HC component and CO component removal activity.

In terms of a Si component and an Al component as constituents of a H-Beta type zeolite, the SiO₂/Al₂O₃ molar ratio (SAR: SiO₂/Al₂O₃) is preferably not lower than 10, more preferably 15 to 200, and most preferably 20 to 100. When the ratio of Al₂O₃ is excessively high and a great quantity of water vapor is present, dealumination of the zeolite may proceed and break the geometric configuration of the zeolite. When the ratio of Al in the zeolite is excessively low, the number of acid sites present in the zeolite is small and HC-cracking performance attributable to the acid sites is poor, which may result in poor performance of the oxidation catalyst.

With the size of the pores formed in the three-dimensional framework structure being large, the H-Beta type zeolite has an excellent function of adsorbing HC and SOF components that have high molecular weights. Because of this excellent SOF adsorptivity, only a small quantity of HC components can be adsorbed on the noble metal component (catalyst poisoning), allowing stable CO oxidation. The H-Beta type zeolite also has excellent thermal durability and therefore imparts excellent thermal durability to an oxidation catalyst that produces heat.

The oxidation catalyst in the present invention exhibits excellent purification performance to remove HC and CO components, possibly because adsorption of a HC component into a pore of the zeolite component facilitates purification and, as for CO, adsorption of HC on the zeolite component prevents HC from causing catalyst poisoning of the noble metal component, which is a main active species in CO oxidation.

In the present invention, although the H-Beta type zeolite is used as the primary zeolite component, other zeolites such as mordenite, USY zeolites, ferrierite, MFI zeolites, CHA zeolites, and AEI zeolites can be additionally used. These zeolites may be used alone or as a mixture of two or more of these, and, as desired, may contain a cation species such as Fe and Cu through ion exchange. However, without using such an additional zeolite in a great quantity but by containing the H-Beta type zeolite as a sole constituent of the zeolite component, the present invention can produce extremely excellent results.

In this way, the H-Beta type zeolite exhibits preferable performance to other zeolites, for such reasons that its Beta type zeolite has large pores to enhance the ability to adsorb HC having a high molecular weight, the cation species is a small hydrogen atom and is less likely to prevent a HC component from being adsorbed into each pore, and the H-Beta type zeolite has excellent thermal durability and tends to retain its predetermined functions during a baking step to be described below or when temporarily left at a high temperature. This HC adsorptivity is advantageous in treatment of exhaust gas emitted from a diesel engine in which its fuel is gas oil containing a HC component having a relatively long chain (with a high molecular weight).

In addition to its excellent activity at low temperatures, the catalyst for exhaust gas purification in the present invention also has excellent thermal durability, which is to be obvious from the results of evaluation conducted after high-temperature durability tests in the following example section. In automobile applications, the temperature of exhaust gas can be high under actual driving conditions at least temporarily, and therefore thermal durability is regarded as a significant function of a catalyst in practical use.

In the oxidation catalyst of the present invention, the content of the H-Beta type zeolite relative to the total quantity of the zeolite component is not lower than 90% by weight and preferably not lower than 95% by weight, and desirably the zeolite component is solely composed of the H-Beta type zeolite. When the content of the H-Beta type zeolite is this high, excellent HC adsorptivity and excellent purification performance to remove CO can be stably preserved after exposure to high temperatures.

In the oxidation catalyst of the present invention, the content of the zeolite component in the entire catalyst composition is 15 to 25% by weight. When the content of the H-Beta type zeolite, which accounts for not lower than 90% by weight of the total quantity of the zeolite component, is not lower than 15% by weight, adequate adsorptivity to HC and CO in exhaust gas at low temperatures is obtained, and when the content of the H-Beta type zeolite is not higher than 25% by weight, the interaction of the H-Beta type zeolite with titania to be described below yields excellent HC and CO removal performance from exhaust gas at low temperatures. The content of the zeolite component is preferably 15 to 23% by weight and is more preferably 18 to 22% by weight.

In conventional art such as Patent Reference 1 and Patent Reference 2 described above, the content of the zeolite component is not lower than 35% by weight, which is higher than in the oxidation catalyst of the present invention. Such a high content of the zeolite component leads to increased adsorption of a HC component. The increased adsorption promotes the cracking performance of the zeolite component itself at high temperatures, and removal of a HC component for purification occurs when exhaust gas is at a high temperature. At a low temperature, however, with such high adsorption and inadequate cracking performance, oxidation of an adsorbed HC component is less likely to proceed efficiently.

By contrast, the present invention has a lower content of the zeolite component than in conventional art, and therefore it was presumed that the accordingly lower HC adsorption would lead to poor HC oxidation performance. However, surprising results have been obtained: the relatively low content of the zeolite component in the catalyst composition leads to enhanced dispersibility of the zeolite component, enhanced space between zeolite particles, enhanced movement of a HC component in and out of a pore of the zeolite component, suppressed readsorption of a HC component onto the zeolite component after release of the HC component out of a pore of the zeolite component, and increased chance for a HC component to come into contact with the active species, Pt, which ultimately promotes removal of a HC component for purification. It has also been found that because the content of the zeolite component is lower than in conventional art but still enough high to inhibit HC from causing catalyst poisoning of the noble metal component as the active species, CO oxidation proceeds at low temperatures. This phenomenon occurs possibly because the content of titania to be described below is high enough to improve the degree of dispersion of the zeolite component.

### [Titania]

The titania in the catalyst in the present invention is an essential component that suppresses the generation of sulfates and the adsorption of SO₂. Furthermore, the titania, when supporting a noble metal, has the function of preventing sulfur poisoning of the supported noble metal (namely, resistance to sulfur poisoning).

There are no particular restrictions on the type of titania, although anatase titania is preferably used for its thermal durability. Examples of heat-resistant titania can be produced by the methods described in Japanese Laid-open Publication (kokai) No. Sho 59-35025, Japanese Laid-open Publication (kokai) No. Sho 64-45725, and Japanese Laid-open Publication (kokai) No. Hei 10-180096. Among these, Japanese Laid-open Publication (kokai) No. Hei 10-180096 discloses an alkoxide hydrolyzation method, in which titanium tetrachloride is dispersed in isopropyl alcohol, and dilute hydrochloric acid is added to the resulting ethyl silicate to produce a colloid, which is then filtrated, dried, and baked to give the heat-resistant titania. Alternatively, the heat-resistant titania can also be obtained by a method such as CVD, coprecipitation, or flame treatment. A commercially available heat resistant titania can also be used.

The heat resistant titania is typically in a powder form, and preferably has a BET specific surface area of 30 to 130 m²/g in terms of improvement in the catalyst's performance of exhaust gas purification. The BET specific surface area is more preferably 50 to 120 m²/g and is particularly preferably 70 to 100 m²/g. When the BET specific surface area is within the range, highly dispersed supporting of the noble metal component is achieved and catalytic activity is improved. Such titania may be used alone or as a mixture of two or more of these, or may contain a metal component other than the main metal component titanium.

The content of titania in the present invention needs to be sufficient to improve resistance to sulfur poisoning and is desirably higher than the content of the zeolite component to highly disperse the zeolite component. The content of titania in the whole catalyst is 55 to 75% by weight, preferably 55 to 72% by weight, and more preferably 55 to 70% by weight. When the content is within the range, not only the action of titania is well exhibited but also high thermal durability inherent to titania is exhibited to achieve adequate activity on exhaust gas having a high temperature.

The combined use of the zeolite component and titania not only achieves improved removal rates of HC, CO, and SOF, suppressed production of sulfates to be described below, and efficient removal of SOF, but also achieves improvement in resistance of silica, which is a constituent of the zeolite component, to sulfur poisoning and resistance of titania to sulfur poisoning and gives a synergistic effect.

The oxidation catalyst in the present invention contains titania (A), the zeolite component (B), and the noble metal component (C), in which the noble metal component (C) as the active species may be supported on all over the zeolite component (B), on all over the titania (A), on both of the zeolite component (B) and the titania (A), or on part of the zeolite component (B) or the titania (A).

### [Noble Metal]

The oxidation catalyst in the present invention contains, on the carrier containing the components above, the noble metal component such as Pt as the catalytic active species.

As the noble metal component, one or more additional noble metals may be used in combination with Pt provided that the catalyst function according to the present invention is not impaired. Examples of the additional noble metals include palladium, rhodium, ruthenium, and iridium, and palladium is preferable. The content of Pt in the noble metal component is preferably 90% by weight, and desirably the noble metal component is solely composed of platinum.

The content of the noble metal component in the entire catalyst composition in the present invention is 0.05 to 4% by weight. The content is preferably 0.1 to 3.5% by weight and more preferably 0.5 to 3% by weight. When the content of the noble metal component is not lower than 0.05% by weight, purification performance to remove HC, CO, and SOF is obtained. An excessively high content of the noble metal component is undesirable because of a high catalyst cost.

[Cocatalyst] In addition to the components described above, the oxidation catalyst in the present invention may also include an optional cocatalyst, provided the actions and advantageous effects of the present invention are not impaired. When the oxidation catalyst contains the noble metal component as its sole active species and the content of the noble metal component needs to be reduced, various cocatalyst components can be added to supplement the oxidation activity of the noble metal component.

As the cocatalyst, various catalyst components used in catalysts for automobile applications can be used. Examples thereof include ceria (CeO₂) and cerium-zirconium composite oxides. Ceria has the action of occluding and releasing oxygen, and is therefore expected, for example, to release oxygen into exhaust gas when the oxygen content in the exhaust gas is low and improve the oxidation function of the oxidation catalyst. In addition, addition of zirconia (ZrO₂) to the ceria is expected, for example, to improve thermal durability of the ceria and possibly prevent a decrease in the catalyst function in a high-temperature environment.

In those cases where the oxidation catalyst in the present invention includes these types of cocatalyst components, the advantageous effects of the titania, the zeolite, and the cocatalyst manifest in a synergistic manner, meaning CO and HC in the exhaust gas, as well as the particulate matters including SOF and sulfates, can be removed with favorable efficiency. A single cocatalyst may be used alone, or a combination of two or more different cocatalysts may be used.

The cocatalyst, which is not an essential component, can be used in a content of 0.1 to 15% by weight and preferably 1 to 7% by weight in the whole catalyst. When the content of the cocatalyst is 0.1 to 15% by weight, the action of the cocatalyst can be expected to be exhibited without impairing the action of the main components of the catalyst in the present invention such as the zeolite component.

### [Other Optional Components]

In addition to the components described above, the oxidation catalyst in the present invention may also include other optional components, provided the actions and advantageous effects of the present invention are not impaired. Examples of these other optional components include barium, magnesium, neodymium, praseodymium, strontium, lanthanum, and zirconia.

These metal components may be included either as elemental metals, or as oxides, composite oxides, carbonates, nitrates, or combinations of these. In order to prevent deterioration of the oxidation catalyst, additional silica and/or alumina (as silica-added alumina or silica-coated alumina, for example) may be added in addition to silica and alumina as constituents of the zeolite component. Considering the tendency of a sulfur component to be accumulated on alumina, it is desirable that the content of alumina is hot excessively high. The content of alumina, when used, in the whole oxidation catalyst is preferably not higher than 20% by weight, more preferably not higher than 15% by weight, and further preferably not higher than 10% by weight. When the content of alumina exceeds 20% by weight, the quantity of SO₂ adsorbed on alumina increases, which may lead to impaired performance after sulfur adsorption. Such an optional component may be used alone or as a mixture of two or more of these. A preferable alumina is γ-alumina having a BET specific surface area of 50 to 200 m²/g.

### [Method of Producing Oxidation Catalyst]

The oxidation catalyst in the present invention can be produced by various methods, and can be obtained by a method of preparing titania and a zeolite and then impregnating the resulting mixture with a noble metal or impregnating the titania and the zeolite individually with a noble metal.

More specifically, this method includes mixing the titania and the zeolite at a predetermined ratio and then impregnating the resulting mixture with an aqueous solution or the like containing a predetermined quantity of a noble metal compound that serves as a raw material of the noble metal. In this case, the noble metal is supported on both of the titania and the zeolite. An alternative method may include first mixing the titania and the noble metal compound and then mixing the resultant with the zeolite, first mixing the zeolite and the noble metal compound and then mixing the resultant with the titania, or first mixing part of the zeolite and part of the titania with the noble metal compound and then mixing the resultant with the rest of the zeolite and the rest of the titania.

The catalyst raw material composition thus prepared may be mixed with a solvent such as water, a surfactant, a cocatalyst and a cocatalyst raw material, alumina, and the like and the resulting slurry may be used as it is for production of a catalyst structure for exhaust gas purification to be described below. Alternatively, the slurry may be subjected to drying and baking, followed by grinding as needed, and the resulting ground product may be mixed with a solvent such as water and, as appropriate, an additional catalyst component to give slurry for use in production of a catalyst structure for exhaust gas purification to be described below.

Preparation of the slurry of the catalyst composition raw material or the ground product may be performed by mixing the ingredients thereof as they are or by subjecting the resulting mixture to wet grinding.

When grinding is performed, it is performed to achieve an average particle diameter of 3 to 20 µm. The average particle diameter is preferably 3 to 10 µm. In the present invention, in which the average particle diameter is within this range, the relatively low content of the zeolite component in the catalyst composition leads to enhanced dispersibility of the zeolite component compared to that in the conventional art, and accordingly enhanced space between zeolite particles, enhanced movement of a HC component in and out of a pore of the zeolite component, suppressed readsorption of a HC component onto the zeolite component after release of the HC component out of a pore of the zeolite component, and increased chance for a HC component to come into contact with the active species, Pt, which ultimately promotes removal of a HC component for purification.

### [Catalyst Structure for Exhaust Gas Purification]

The catalyst structure for exhaust gas purification in the present invention includes a support, and the aforementioned oxidation catalyst supported on the support.

Examples of the support include cordierite, alumina, mullite, and elemental metals. Specific examples of the catalyst structure for exhaust gas purification include flow-through supports using a continuous regeneration system (for example, oxidation catalyst (flow-through)+filter systems, and oxidation catalyst-supported filter systems). The catalyst structure for exhaust gas purification in the present invention can be used in any application that involves the removal of CO, HC, SOF, and the like from exhaust gas, but is particularly useful in applications that involve purification of exhaust gas from a diesel engine.

The catalyst structure for exhaust gas purification in the present invention can be obtained by coating a support with the slurry that is prepared as described above by mixing the titania or the zeolite, the noble metal compound, alumina, and the additional components. Preferably, the noble metal compound is first supported on part of or the whole of the zeolite or the titania and then coating is performed by wash-coating. After coating and drying, baking is performed in the atmosphere at 400 to 600°C for 0.5 to 2 hours to give the catalyst structure.

The quantity of the oxidation catalyst for exhaust gas purification supported on a unit volume of the support is preferably 55 to 120 g/L, more preferably 65 to 95 g/L, and further preferably 65 to 80 g/L. According to the present invention, the quantity of the zeolite can be significantly smaller than in conventional art to achieve efficient removal of CO, HC, SOF, and the like. The reduction in the quantity of the catalyst component thus supported can lead to reduction in accumulation of sulfur, which is a substance that causes catalyst poisoning.

### [Method for Purifying Exhaust Gas]

The catalyst structure for exhaust gas purification in the present invention can be suitably used in the method for purifying exhaust gas. The catalyst structure for exhaust gas purification is not particularly limited in its uses and can be applied to internal combustion engines, a mobile source, as well as boilers, a non-mobile source.

When applied to an internal combustion engine, the catalyst structure for exhaust gas purification is installed within an exhaust gas channel of a diesel engine, where it comes into contact with exhaust gas being emitted.

In the diesel engine, advantageous effects of the present invention are remarkably exhibited when combustion is controlled to lower the engine speed for the purpose of fuel economy improvement and consequently the temperature of exhaust gas is within a low-temperature range of not higher than 300°C, in particular not higher than 250°C, during operation of the engine.

Even when the temperature of exhaust gas emitted from the internal combustion engine is low, the quantities of CO, HC, and SOF components in the exhaust gas can be decreased by bringing the exhaust gas into contact with the catalyst structure for exhaust gas purification that contains the oxidation catalyst of the present invention. Between the internal combustion engine and the catalyst structure for exhaust gas purification in the present invention or in a step after the contact with the catalyst structure for exhaust gas purification, an additional purification apparatus such as a known PM filter and a known SCR catalyst may be installed.

### Examples

The following describes in greater detail the present invention using a series of examples, although the present invention is in no way limited by these examples. Details relating to each of the components used in the preparation of catalysts are as shown below.

### <Oxidation Catalyst Components>

- Alumina
   γ-alumina (BET specific surface area: approximately 150 m²/g)
- Titania
   Anatase titania (heat-resistant titania, BET specific surface area: approximately 90 m²/g)
- Zeolites
   H-Beta type zeolite (SiO₂/Al₂O₃ (molar ratio) = 25)
   H-ZSM-5 (SiO₂/Al₂O₃ (molar ratio) = 25)
- Noble metals
   Chloroplatinic acid aqueous solution (concentration in terms of platinum: 20% by weight)
   Palladium nitrate aqueous solution (concentration in terms of palladium: 20% by weight)

### <Example 1>

A chloroplatinic acid aqueous solution, a H-Beta type zeolite, titania, and alumina were prepared as listed in Table 1. According to the kinds and the contents of the components in Table 1, a carrier as the H-Beta type zeolite and titania was impregnated with the chloroplatinic acid aqueous solution serving as the source of a noble metal (platinum). Subsequently, alumina was mixed thereto, and a sufficient quantity of a medium (water) was mixed thereto. Wet grinding was then performed until the average particle diameter became 5 µm, and slurry (an oxidation catalyst) was prepared.

Then, a flow-through support having a height of 100 mm, a diameter of 93 mm, a cell wall thickness of 0.15 mm, and a cell density of 93 cel/cm² (600 cell/6 mil) was coated with the resulting slurry by wash-coating so that the content of the noble metal per unit volume of the support was 2 g/L. The quantity of the catalyst composition coated on the flow-through support was 74 [g/L]. After drying, baking was performed in the atmosphere at 500°C for 1 hour to give a catalyst structure.

The resulting catalyst structure was used in measurement of the CO emission quantities, the HC emission quantities, and the quantities of the accumulated sulfur component according to the following evaluation method.

### <Examples 2 to 4>

Catalysts of Examples 2 to 4 were produced in the same manner as in Example 1 except that the quantities of the H-Beta type zeolite and titania were changed as listed in Table 1. The catalyst of Example 1 contained the zeolite in a quantity near the upper limit defined by the present invention, the catalyst of Example 2 contained the zeolite in a quantity near the lower limit defined by the present invention, the catalyst of Example 3 contained titania in a quantity near the lower limit defined by the present invention, and the catalyst of Example 4 contained titania in a quantity near the upper limit defined by the present invention.

The resulting catalyst structures were used in measurement of the CO emission quantities, the HC emission quantities, and the quantities of the accumulated sulfur component according to the following evaluation method.

### <Comparative Examples 1 to 3>

A catalyst structure was produced in the same manner as in Example 1 except that a combination of the H-Beta type zeolite used in Example 1 and H-ZSM-5 was used as the zeolite component and the quantity of the H-Beta type zeolite was increased, as listed in Table 1 (Comparative Example 1). A catalyst structure was produced in the same manner as in Comparative Example 1 except that part of the chloroplatinic acid aqueous solution used in Comparative Example 1 was replaced with a palladium nitrate aqueous solution (Comparative Example 2). A catalyst structure was produced in the same manner as in Example 1 except that the quantity of the H-Beta type zeolite was decreased and the quantity of alumina was increased from the quantities thereof in Example 1 (Comparative Example 3).

The resulting catalyst structures were used in measurement of the CO emission quantities, the HC emission quantities, and the quantities of the accumulated sulfur component according to the following evaluation method.

**[Table 1]**

| | Ex. 1 | Ex. 2 | Ex. 3 | Ex. 4 | Comp. Ex. 1 | Comp. Ex. 2 | Comp. Ex. 3 |
|---|---|---|---|---|---|---|---|
| Pt quantity [% by weight] | 2.7 | 2.7 | 2.7 | 2.7 | 2.7 | 1.8 | 2.7 |
| Pd quantity [% by weight] | | | | | | 0.9 | |
| H-Beta type zeolite [% by weight] | 20 | 16 | 21 | 21 | 27 | 27 | 9 |
| ZSM-5 [% by weight] | | | | | 14 | 14 | |
| TiO₂ [% by weight] | 68 | 71 | 60 | 74 | 54 | 54 | 68 |
| Al₂O₃ [% by weight] | Balance | Balance | Balance | Balance | Balance | Balance | Balance |
| Total quantity of catalyst [g/L] | 74 | 74 | 74 | 74 | 74 | 74 | 74 |

### <Evaluation Methods>

### 1. CO Emission Quantity and HC Emission Quantity (at Low Temperatures)

Each of the catalyst structures prepared in the examples and comparative examples was aged in air in an electric furnace at 650°C for 25 hours, and was then used in an engine test. The engine test was conducted using a 3L DI TI (3L direct injection, fitted with a turbo-intercooler) benchtop engine, with the aged catalyst structure positioned at a point 1.5 m downstream from the engine. In this test, JIS No. 2 diesel fuel (S concentration: 30 to 35 ppm by weight) was used as the fuel.

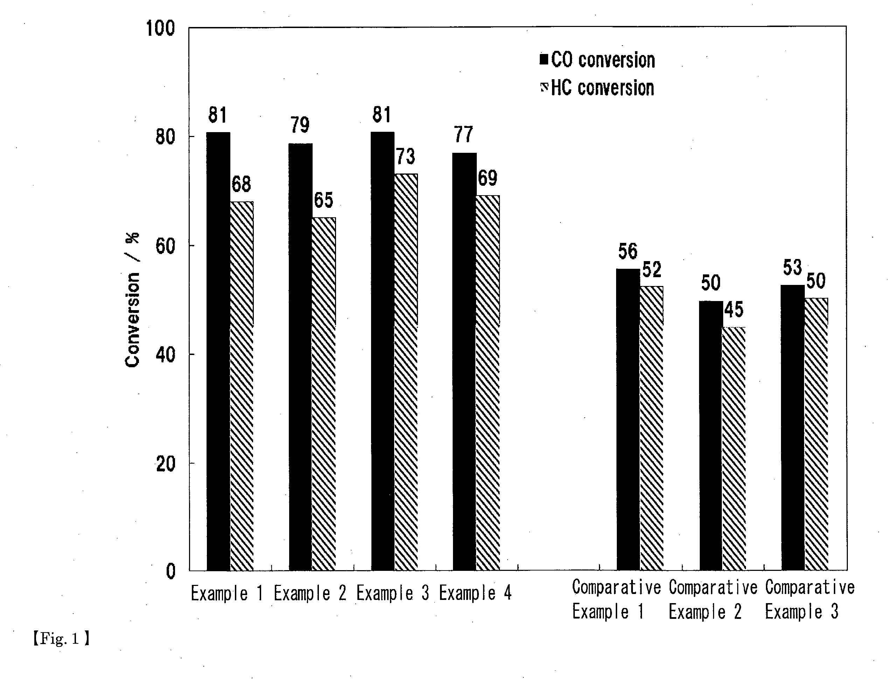

Purification performance to remove CO and HC components was evaluated according to the NEDC (New European Driving Cycle). Analysis of exhaust gas components was performed on MEXA 1600D manufactured by HORIBA. The NEDC represents driving environments in Europe and consists of four low-speed driving patterns beginning from the instant when the engine starts intended to represent urban driving and one high-speed driving pattern intended to represent extra-urban driving. The UDC refers to part of the NEDC called Urban Driving Cycle, and UDC2-4 refers to the second to fourth tests intended to represent an urban driving pattern at a low engine speed and a low temperature of exhaust gas. The CO emission quantities and the HC emission quantities illustrated in FIG. 1 are the results of evaluation according to UDC2-4, which is intended to represent a low-temperature range. Conversion in FIG. 1 refers to a conversion rate, and THC refers to the total hydrocarbon or the HC component. The average temperatures in the respective UDC modes in this evaluation were [UDC2: 141°C], [UDC3: 150°C], and [UDC4: 155°C].

As illustrated in FIG. 1, Example 1 of the present invention exhibits excellent purification performance to remove both CO and THC (conversion rate: Conversion) within a low-temperature range, superior to Comparative Example 1 in which the zeolite quantity is higher. Comparative Example 1 and Comparative Example 2 have proven that Comparative Example 1 with a higher Pt quantity is superior in purification performance to remove CO and THC. Example 1 and Comparative Example 3 have proven that an excessively small zeolite quantity as in Comparative Example 3 results in poor purification performance.

As for the titania quantity, it has proven that Example 4 in which the titania quantity is higher than in Example 3 has a tendency to have a slightly lower HC conversion rate. This has proven that the content of titania used is also desirably within the range defined by the present invention.

### 2. CO Emission Quantity (in all the modes defined by the NEDC)

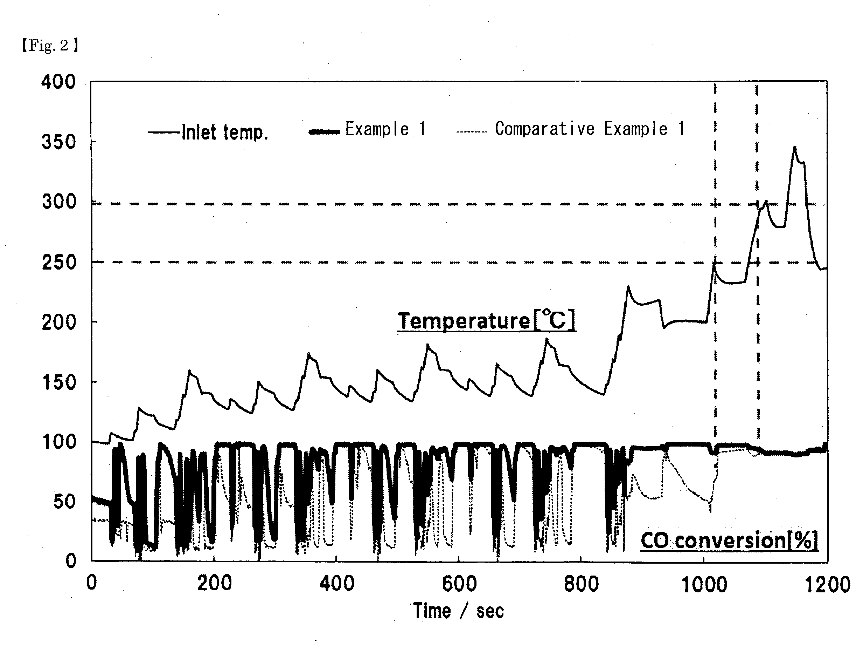

The CO emission quantities were measured, in terms of the temperatures and the conversion rates in Example 1 and Comparative Example 1 in all the modes defined by the NEDC. The results are illustrated in FIG. 2. Analysis of CO was performed on MEXA 1600D manufactured by HORIBA. "Inlet" in FIG. 2 refers to the temperature of exhaust gas entering the catalyst. Relations between the time axis, the temperature, and the mode were expressed as [time : average temperature : mode] and were as follows: [0 to 200 seconds : 120°C : UDC1], [200 to 400 seconds : 141°C : UDC2], [400 to 600 seconds : 150°C : UDC3], [600 to 800 seconds : 155°C : UDC4], and [800 to 1,200 seconds : 230°C : EUDC]. The EUDC is an abbreviation for Extra Urban Driving Cycle, and refers to a high-speed driving pattern intended to represent extra-urban driving.

These results indicate that the catalyst of Example 1 of the present invention was superior to the catalyst of Comparative Example 1 in purification performance to remove CO (conversion rate: Conversion) up until about 300°C. Particularly up until about 250°C, the difference in advantageous effects in the performance was remarkable.

### 3. HC Emission Quantity (in all the modes defined by the NEDC)

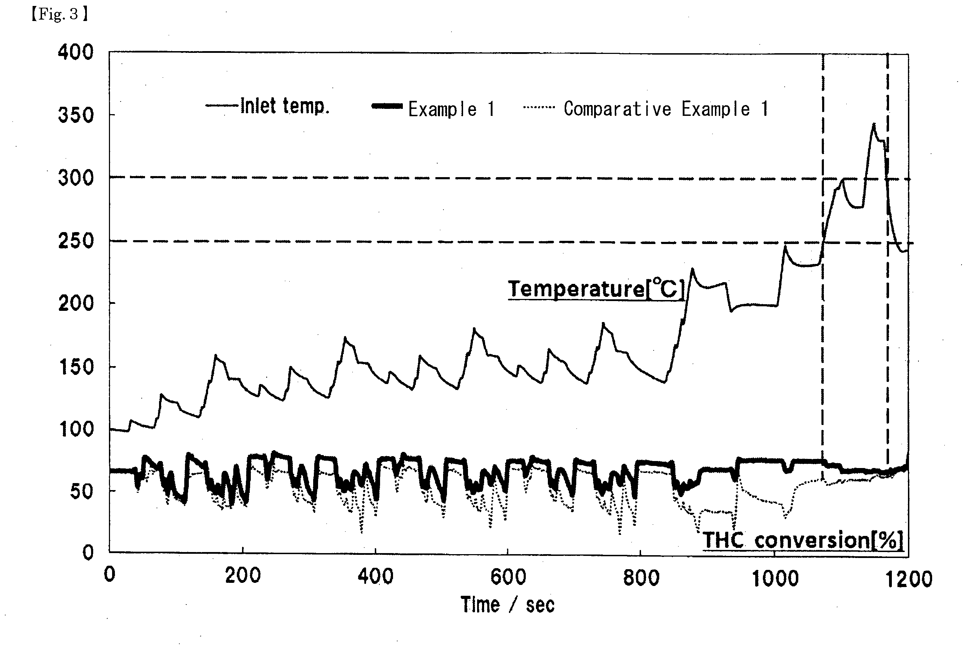

Purification performance to remove HC (conversion rate: Conversion) was also measured under the same conditions as in "2. CO Emission Quantity" above. The results are illustrated in FIG. 3. These results also indicate that the catalyst of Example 1 was superior to the catalyst of Comparative Example 1 in purification performance up until about 300°C. Particularly up until about 250°C, the difference in advantageous effects in the performance was remarkable.

### 4. Quantity of Accumulated Sulfur Component

A segment was cut out of each of the catalysts of Example 1 and Comparative Example 1 and was used in model-gas evaluation, in which the quantity of sulfur (S) accumulation on the catalyst was measured under the following conditions.

### [Conditions in Measurement of Quantities of S Accumulation]

- Catalyst size:
   - Diameter: 25 [mm]
   - Length: 50 [mm]
- Model-gas composition:
   - SO₂: 0.2 [vol%]
   - O₂: 13 [vol%]
   - H₂O: 10 [vol%]
   - N₂: Balance, 76.8 [vol%]
- Apparatus used for evaluation: a horizontal tube furnace
- Catalyst temperature: 200 [°C]
- Quantity of model-gas passage: 10 [L/min]
- Time for treatment with model gas: 45 [minutes]

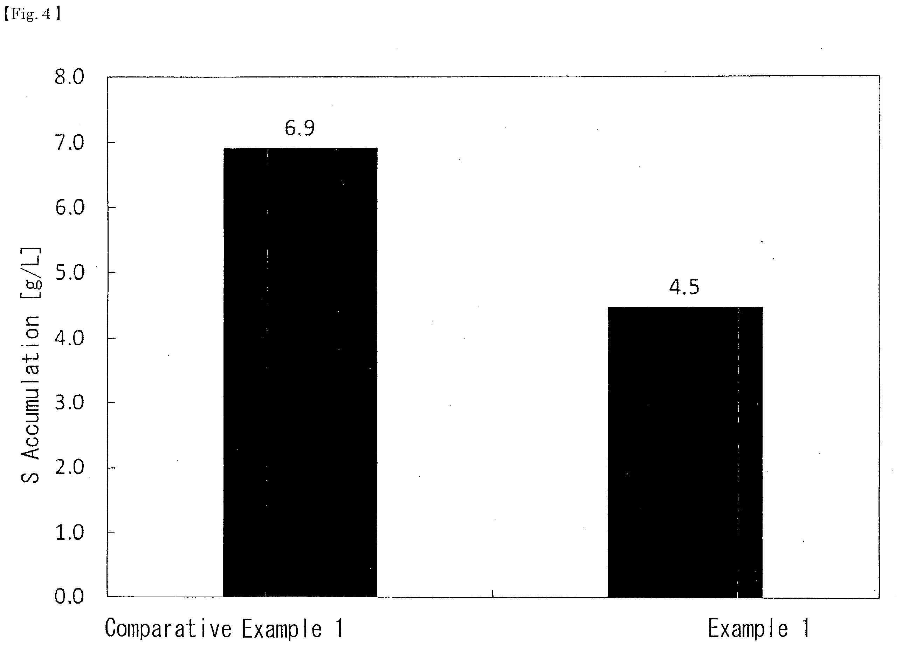

After each of the catalysts was exposed to the conditions described above, the quantity of the element S component accumulated on a unit volume of the catalyst was measured by XRF (X-ray Fluorescence Analysis). The results are illustrated in FIG. 4. The results indicate that in the catalyst of Example 1, compared to the case of the catalyst of Comparative Example 1, the quantity of S accumulation is small and catalyst poisoning and emission of PM derived from a sulfur component are suppressed.

### Industrial Applicability

The oxidation catalyst for exhaust gas purification in the present invention exhibits excellent purification performance to remove CO and HC from exhaust gas at low temperatures. A catalyst structure for exhaust gas purification that contains the catalyst is therefore particularly useful for purifying exhaust gas emitted from diesel engines operated at low speeds for the purpose of fuel economy improvement. The oxidation catalyst in the present invention can also be used to purify exhaust gas emitted from gasoline engines and purify exhaust gas emitted from non-mobile sources such as boilers.

## Claims

1. An oxidation catalyst for exhaust gas purification comprising: titania (A) and a zeolite component (B, either or both of titania (A) and a zeolite component (B) as a carrier; and a noble metal component (C) supported on the carrier, wherein
the zeolite component (B) contains a H-Beta type zeolite in a quantity of not less than 90% by weight relative to the total quantity of the zeolite component (B), and the content of each component in the whole catalyst is 55 to 75% by weight for the titania (A), 15 to 25% by weight for the zeolite component (B), and 0.05 to 4% by weight for the noble metal component (C).

2. The oxidation catalyst for exhaust gas purification according to claim 1, wherein the noble metal component (C) contains platinum or palladium and the quantity of platinum in the total quantity of the noble metal component is not lower than 90% by weight.

3. The oxidation catalyst for exhaust gas purification according to claim 1, wherein a SiO₂/Al₂O₃ molar ratio (SAR) in the H-Beta type zeolite is not lower than 10.

4. The oxidation catalyst for exhaust gas purification according to claim 1, wherein the titania (A) is heat resistant titania.

5. The oxidation catalyst for exhaust gas purification according to claim 1, further comprising:
alumina in a quantity of not higher than 20% by weight.

6. A catalyst structure for exhaust gas purification comprising:
the oxidation catalyst for exhaust gas purification defined in claim 1 as a coating on a honeycomb-shaped support and in a quantity of 55 to 120 g/L per unit volume of the support.

7. A method for purifying exhaust gas, the method comprising:
bringing exhaust gas emitted from a diesel engine into contact with the catalyst structure for exhaust gas purification defined in claim 6.

8. The method for purifying exhaust gas according to claim 7, wherein the exhaust gas has a temperature of not higher than 300°C.

## Patentansprüche

1. Oxidationskatalysator zur Abgasreinigung, umfassend:
Titanoxid (A) und eine Zeolithkomponente (B), eines oder beide von Titanoxid (A) und einer Zeolithkomponente (B) als einen Träger; und
eine Edelmetallkomponente (C), geträgert auf dem Träger, wobei
die Zeolithkomponente (B) einen Zeolith vom H-Beta-Typ in einer Menge von nicht weniger als 90 Gewichts-%, bezogen auf die Gesamtmenge der Zeolithkomponente (B), enthält und der Gehalt von jeder Komponente in dem gesamten Katalysator 55 bis 75 Gewichts-% für das Titanoxid (A), 15 bis 25 Gewichts-% für die Zeolithkomponente (B) und 0,05 bis 4 Gewichts-% für die Edelmetallkomponente (C) beträgt.

2. Oxidationskatalysator zur Abgasreinigung nach Anspruch 1, wobei die Edelmetallkomponente (C) Platin oder Palladium enthält und die Menge von Platin in der Gesamtmenge der Edelmetallkomponente nicht niedriger als 90 Gewichts-% ist.

3. Oxidationskatalysator zur Abgasreinigung nach Anspruch 1, wobei ein Stoffmengenverhältnis von SiO₂/Al₂O₃ (SAR) in dem Zeolith vom H-Beta-Typ nicht niedriger als 10 ist.

4. Oxidationskatalysator zur Abgasreinigung nach Anspruch 1, wobei das Titanoxid (A) wärmebeständiges Titanoxid ist.

5. Oxidationskatalysator zur Abgasreinigung nach Anspruch 1, weiter umfassend:
Aluminiumoxid in einer Menge von nicht mehr als 20 Gewichts-%.

6. Katalysatorstruktur zur Abgasreinigung, umfassend:
den Oxidationskatalysator zur Abgasreinigung nach Anspruch 1 als eine Beschichtung auf einem wabenförmigen Träger und in einer Menge von 55 bis 120 g/L pro Einheitsvolumen des Trägers.

7. Verfahren zum Reinigen von Abgas, das Verfahren umfassend:
das Inkontaktbringen von Abgas, ausgestoßen aus einem Dieselmotor, mit der Katalysatorstruktur zur Abgasreinigung nach Anspruch 6.

8. Verfahren zum Reinigen von Abgas nach Anspruch 7, wobei das Abgas eine Temperatur von nicht mehr als 300°C aufweist.

## Revendications

1. Catalyseur d'oxydation pour la purification de gaz d'échappement comprenant :
du dioxyde de titane (A) et un composant de zéolite (B), l'un ou l'autre ou à la fois le dioxyde de titane (A) et un composant de zéolite (B) comme excipient ; et
un composant de métal noble (C) supporté sur l'excipient, dans lequel
le composant de zéolite (B) contient une zéolite de type H-Bêta en une quantité de pas moins de 90 % en poids par rapport à la quantité totale du composant de zéolite (B), et la teneur en chaque composant dans le catalyseur entier est de 55 à 75 % en poids pour le dioxyde de titane (A), 15 à 25 % en poids pour le composant de zéolite (B) et 0,05 à 4 % en poids pour le composant de métal noble (C).

2. Catalyseur d'oxydation pour la purification de gaz d'échappement selon la revendication 1, dans lequel le composant de métal noble (C) contient du platine ou palladium et la quantité de platine dans la quantité totale du composant de métal noble n'est pas inférieure à 90 % en poids.

3. Catalyseur d'oxydation pour la purification de gaz d'échappement selon la revendication 1, dans lequel un rapport molaire de SiO₂/Al₂O₃ (SAR) dans la zéolite de type H-Bêta n'est pas inférieur à 10.

4. Catalyseur d'oxydation pour la purification de gaz d'échappement selon la revendication 1, dans lequel le dioxyde de titane (A) est du dioxyde de titane résistant à la chaleur.

5. Catalyseur d'oxydation pour la purification de gaz d'échappement selon la revendication 1, comprenant en outre :
de l'alumine en une quantité non supérieure à 20 % en poids.

6. Structure de catalyseur pour la purification de gaz d'échappement comprenant :
le catalyseur d'oxydation pour la purification de gaz d'échappement selon la revendication 1 comme enrobage sur un support en forme de nid d'abeilles et en une quantité de 55 à 120 g/l par volume unitaire du support.

7. Procédé pour la purification de gaz d'échappement, le procédé comprenant :
amener des gaz d'échappement émis depuis un moteur diesel en contact avec la structure de catalyseur pour la purification de gaz d'échappement selon la revendication 6.

8. Procédé pour la purification de gaz d'échappement selon la revendication 7, dans lequel les gaz d'échappement ont une température non supérieure à 300°C.
